# EUROPEAN PATENT SPECIFICATION

(11) **EP 2 878 426 B1**
(45) Date of publication and mention of the grant of the patent: **14.12.2016**
(21) Application number: 14189217.4
(22) Date of filing: 16.10.2014
(51) Int. Cl.: B29C 51/26, B29C 33/30, B29C 51/38, B29C 31/00

(54) **Forming apparatus**
Formgebungsvorrichtung
Appareil de formation

(30) Priority: 16.10.2013 IT MO20130293
(43) Date of publication of application: 03.06.2015
(73) Proprietor: C.M.S. S.p.A., 24019 Zogno (BG) (IT)
(72) Inventor: Villa, Giuseppe, 21100 Varese (IT)
(74) Representative: Pandolfi, Paolo

(56) References cited:
- EP-A1- 1 520 682
- EP-A1- 2 383 091
- EP-A1- 2 803 470
- EP-A1- 2 873 503
- DE-B3-102006 004 093
- DE-U1- 9 010 832
- US-A- 5 359 764
- US-A- 5 773 041
- US-A- 5 940 953
- US-A1- 2007 284 780
- US-A1- 2010 314 801

## Description

### Background of the invention

The invention relates to a forming apparatus, in particular a compression moulding and/or thermoforming apparatus.

More precisely, the apparatus in question can be used to form, in particular draw, sheets of reinforced thermoplastic material to make finished products such as shells of suitcases, sports equipment, vehicle parts and the like.

Reinforced thermoplastic materials, which are generally supplied in rectangular sheets, comprise a matrix in thermoplastic material reinforced by a reinforcing material or filler that is added in the form of long or short fibres or particles. The fibres can be arranged in the matrix according to a same orientation, for example parallel to one another, or according to different orientations, for example to form a grid. Such materials have high mechanical features, are light and easy to recycle and for this reason they are widely used in many technical fields where such features are required.

Forming apparatuses are known for forming sheets of reinforced thermoplastic material comprising a frame, an upper table and a lower table. The upper table and the lower table are movable towards/away from one another, with respect to the frame, the upper table being operationally positioned above the lower table. Known apparatuses are further provided with an upper half mould and with a lower half mould, supported respectively by the upper table and by the lower table, to form a product by pressing. Further, such apparatuses include fixing mechanisms for fixing in a releasable manner the upper half mould to the upper table and the lower half mould to the lower table. Also, known apparatuses comprise a lifting system for lifting the upper half mould and the lower half mould in a mould-changing step. In particular, this lifting system comprises a pair of pneumatic lifting cylinders, supported by the lower table, and drivable so as to protrude above, or to be completely received below, the lower table.

In use, in a mould-changing step, there is provided to move the upper table to the lower table until the upper half mould and the lower half mould are shapingly coupled. Subsequently, the upper half mould and the upper half mould are unfastened, by acting on the respective fixing mechanisms, from the upper table and from the lower table, respectively. Still subsequently, the lifting cylinders are driven that lift the upper half mould/lower half mould pair with respect to the lower table. In this manner it is possible for the forks of a forklift truck to be inserted in a space defined between the lower table and the lower half mould, and the upper half mould/lower half mould to be replaced to be removed from the forming apparatus.

A drawback of known apparatuses is that the lifting system is costly and complicated to make. In fact, it is necessary to provide the forming apparatus with a specific pneumatic circuit for driving the lifting cylinders.

A further drawback of known apparatuses is that the lifting system is not very efficient and safe. In fact, owing to the excessive weight of the half moulds, the pneumatic lifting cylinders may not be able to lift the half moulds to a sufficient height for inserting the forks, or owing to possible pneumatic losses or malfunctions (for example non simultaneous driving of the pneumatic lifting cylinders), the pneumatic lifting cylinders are not able to support the half moulds safely, in particular at a sufficient height for inserting the forks, or are not able to move the half moulds towards or away from the table, maintaining the half moulds in a substantially horizontal position, with the risk that the half moulds slip, during movement, onto the lower table, damaging the lower table.

US5359764A discloses a method for disassembling and assembling a mold. The method enables a return pin to be safely attached or detached against an elastic force of a return spring which is provided around the return pin.

US577041A describes a mold clamping apparatus for selectively detachably securing a lower mold plate mounting a lower mold section relative to a lower platen.

US2007/284780A1 discloses a transfer press apparatus for molding a material panel in a predetermined shape

### Summary of the invention

An object of the invention is to improve forming apparatuses, in particular compression moulding and/or thermoforming apparatuses.

A further object is to provide a forming apparatus provided with a lifting system that is efficient, safe, cheap and easy to make.

These objects and still others are achieved by a forming apparatus according to one or more of the claims set out below.

### Brief description of the drawings

The invention can be better understood and implemented with reference to the attached drawings, which illustrate an embodiment thereof by way of non-limiting example, in which:
Figure 1 is a perspective view of a forming apparatus made according to the invention, devoid of the half moulds;
Figure 2 is a perspective view of the apparatus in Figure 1 provided with half moulds, with some details removed to show others better;
Figure 3 is a section, with some details removed to show others better, of spacer means included in the apparatus according to the invention, in which the spacer means is in a first operating configuration;
Figure 4 is a perspective view, with some details removed to show others better, of the spacer means in Figures 3 in the first operating configuration;
Figure 5 is a section, with some details removed to show others better, of the spacer means included in the apparatus according to the invention, in which the spacer means is in a second operating configuration;
Figure 6 is a perspective view, with some details removed to show others better, of the spacer means in Figures 5 in the second operating configuration.

### Detailed description

With reference to the aforesaid Figures, it has been indicated with 1 a forming apparatus its entirety, in particular a compression moulding and/or thermoforming apparatus, which can be used, specifically, but not exclusively, to form, for example by drawing, sheets, which are not shown, of reinforced thermoplastic material to make finished products such as suitcases, sports equipment, vehicles parts, and the like.

The forming apparatus 1 comprises a frame 2, a first table 3, or upper table, and a second table 4, or lower table, for supporting, respectively, a first half mould S1 and a second half mould S2 to form a product by pressing. The first table 3 and the second table 4 are movable with respect to the frame 2.

In particular, the first table 3 and the second table 4 each comprise a fixing surface S on which it is possible to fix, in a known manner, the first half mould S1 and the second half mould S2, respectively.

The forming apparatus 1 can comprise means, which is not shown, for heating the sheet before pressing. Alternatively, the forming apparatus 1 can be associated with a heating apparatus, not shown, arranged next to the forming apparatus 1 to preheat the sheet that will then be transferred to the forming apparatus 1.

The forming apparatus 1 comprises moving means to move vertically the two tables 3 and 4 with respect to one another. The moving means can comprise, for example, for each of the two tables 3 and 4, at least one transferring device 5, for example one transferring device with a screw and nut screw (ball screw) mechanism. The moving means can comprise, in particular, for each of the two tables 3 and 4, two or more transferring devices 5. In the specific example there are four transferring devices 5 for each of the two tables 3 and 4.

The forming apparatus 1 can comprise static and linear guiding means, with which at least the table 3 and 4 are slidably coupled.

The guiding means can comprise a plurality of vertical longitudinal elements, which are integral with the frame 2, in particular a plurality of columns 8, for example at least three columns, four in the specific case, each of which is slidably coupled with at least a first slidable guiding element, for example a first bush 9, which is integral with the first table 3, and at least a second slidable guiding element, for example a second bush 10, which is integral with the second table 4.

The guiding means can be arranged laterally outside a peripheral edge of the tables 3 and 4, and/or laterally outside a zone of the tables 3 and 4, intended for receiving the corresponding half mould.

The forming apparatus 1 comprises driving means for exerting a relatively great compression moulding force, for example greater than 10 tonnes, or greater than 50 tonnes, between the two tables 3 and 4, that is suitable for forming the sheet by pressing.

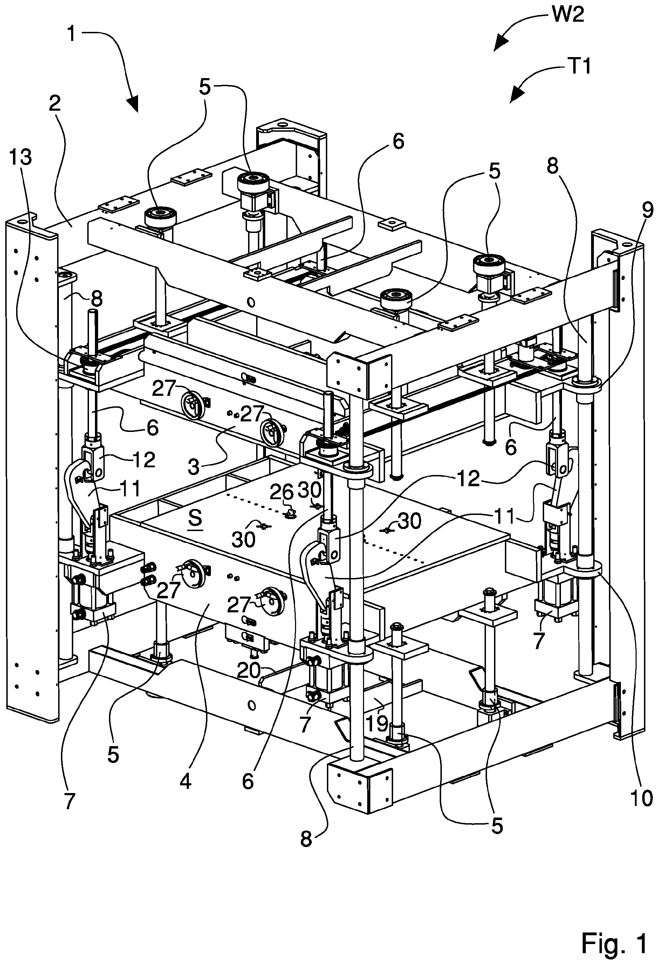

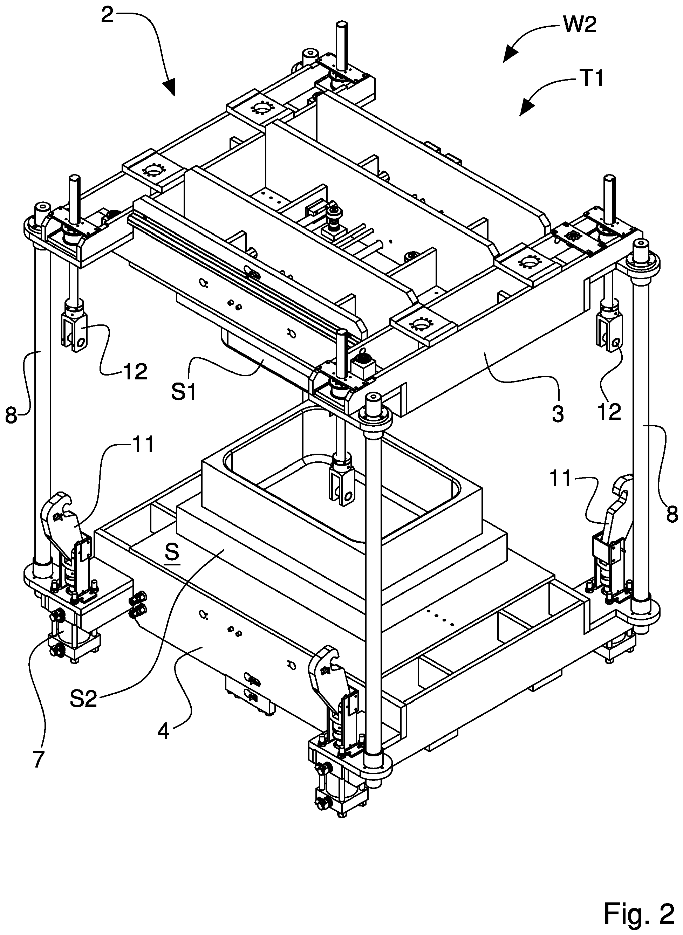

The driving means can comprise a first part arranged on one table and a second part arranged on the other table. The first part and the second part are susceptible of being interlocked with one another in a removable manner. The first part and the second part of the driving means are separate from one another when the two tables are at a certain distance from one another (Figure 2) and are couplable together when the moving means moves the two tables near one another in a corresponding coupling position (Figures 1), as will be explained better below.

The first part of the driving means can comprise, in particular, at least one traction shaft 6 mounted on the first table 3. The second part of the second driving means can comprise, in particular, at least one traction actuator 7 mounted on the second table 4.

The second part of the driving means can comprise at least one hooking element 11 arranged for coupling with the aforesaid first part. Each hooking element 11 can have the possibility of adopting an engagement position, which is not shown, in which it hooks the aforesaid first part, when the two tables 3 and 4 are in the corresponding coupling position, and a disengagement position in which it is unhooked (Figure 1) from the first part. The movement of each hooking element 11 between the engagement and disengagement positions can be driven, in particular, by the respective, for example hydraulic, traction actuator 7.

The movement of each hooking element 11 between the engagement and disengagement positions can comprise, for example, a rotation around a pin.

The first part of the driving means can comprise, as in this specific case, a hooking zone 12 arranged for receiving a respective hooking element 11. This hooking zone 12 can be arranged at one, lower, end of a corresponding traction shaft 6. This hooking zone 12 can be, for example, of the pin-on-fork type or of the ring or eyebolt type or of yet another type.

In the specific example, each hooking element 11, for example in the form of a single hook, can pass from the disengagement position to the engagement position, for example by means of a rotation, in such a manner as to enter an aperture defined by the hooking zone 12, for example the aperture defined by pin and fork, or by the ring or eyebolt, to then hook the traction shaft 6 and then start to pull back the traction shaft 6 by driving the respective traction actuator 7.

Each traction shaft 6 can be mounted on the first table 3 with the possibility of performing, at the command of motor means, movements in the direction of its own longitudinal axis, so as to be able to adjust its own relative position with respect to the first table 3. In particular, each traction shaft 6, with a longitudinal vertical axis, can be moved by a vertical motorised axis, for example by using a brushless motor 13, or other type of motor. Adjusting the vertical position of the traction shaft 6 enables the system to be adapted to different sizes of the half moulds, so that each hooking element 11 on a table can meet the respective hooking zone 12 correctly that is carried by the shaft 6 on the other table, whatever the dimension, or the height, of the half moulds attached to the tables.

Each table can comprise a central portion intended for supporting the corresponding half mould and can further comprise at least one shelf portion protruding in a cantilevered manner from the aforesaid central portion. Each first part of the driving means and/or each second part of the driving means can be mounted on a shelf portion of the respective table.

The first part of the driving means can comprise a plurality of, for example at least three, four in the specific case, traction shafts 6 arranged on the first table 3. The second part of the second driving means can comprise a plurality of, for example at least three, four in the specific case, traction actuators 7 arranged on the second table 4. Each traction actuator 7 can be associated with a respective traction shaft 6. Each traction actuator 7 can comprise, as in this example, a fluid, for example hydraulic, linear actuator. The maximum stroke of each traction actuator 7 can be less (less than two thirds, or less than half, or less than a third, or less than a quarter) of the maximum stroke of the transferring devices 5 adjusting the position of each traction shaft 6.

In use, initially, the tables with the corresponding half moulds are spaced apart from one another. The moving means, i.e. the screw-nut screw transferring devices 5, move the tables up to the coupling position.

The traction shafts 6 were adjusted previously in the suitable position (for example by the brushless motors 13), with respect to the table (upper first table 3) on which they are mounted, according to the dimensions of the half moulds, so that each hooking zone 12 (on the lower end) of each traction shaft 6 faces the respective hooking element 11 (for the time being in the disengagement position) at the correct relative position of the half moulds brought close to one another.

At this point the traction actuators 7 start activation to move, in an initial step of the stroke of the traction actuators 7, the hooking elements 11 from the disengagement position to the engagement position (rotating around the pin thereof) to enter inside the respective hooking zones 12 on the traction shafts 6.

The traction actuators 7 then continue activation, so that, in a subsequent step of the stroke of the traction actuators 7, the actuators 7 can pull the traction shafts 6 (now connected to the actuators by the hooking system) so as to generate the compression force between the half moulds that is suitable for forming the sheet.

The forming apparatus 1 will be provided with programmable electronic control means (a numeric control system) to control the aforesaid operation.

At the opening of the half moulds, also the locking and traction system will open, in a reversible manner with respect to the closure, and the two parts of the system will return to being separate.

The apparatus 1 further comprises spacer means 15 that is slidably associated with the second table 4, for spacing, in a mould-changing step, the half moulds S1, S2 apart from the second table 4. In particular, the spacer means 15 is received in a housing 23 of the second table 4 obtained below the fixing surface S, the housing 23 being bounded laterally by a pair of substantially vertical walls 24 and the fixing surface S being provided with holes 30, that are traversable by the spacer means 15, to enable the spacer means 15 to protrude above the fixing surface S.

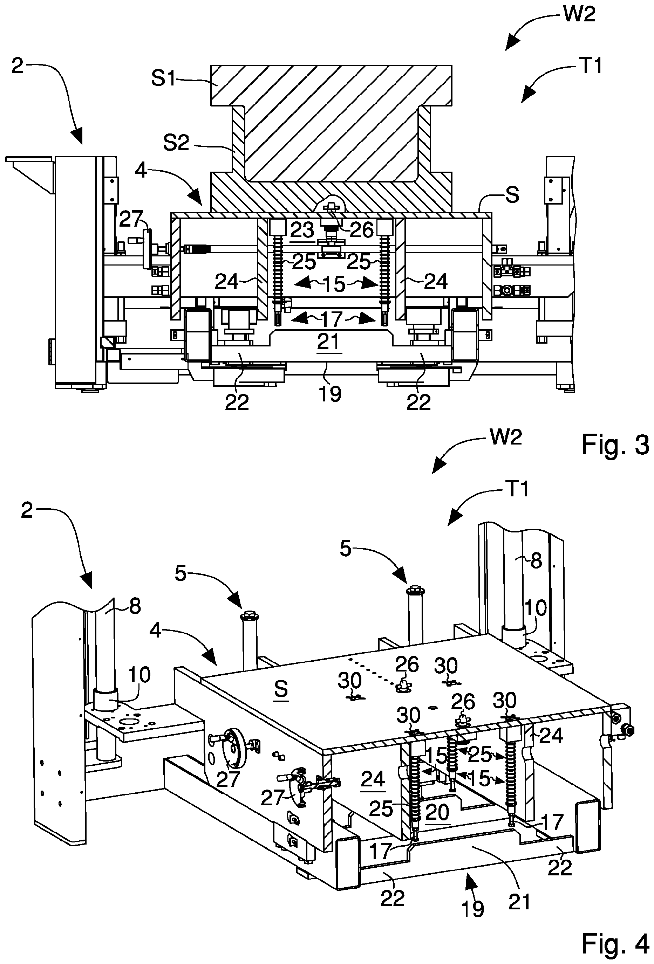

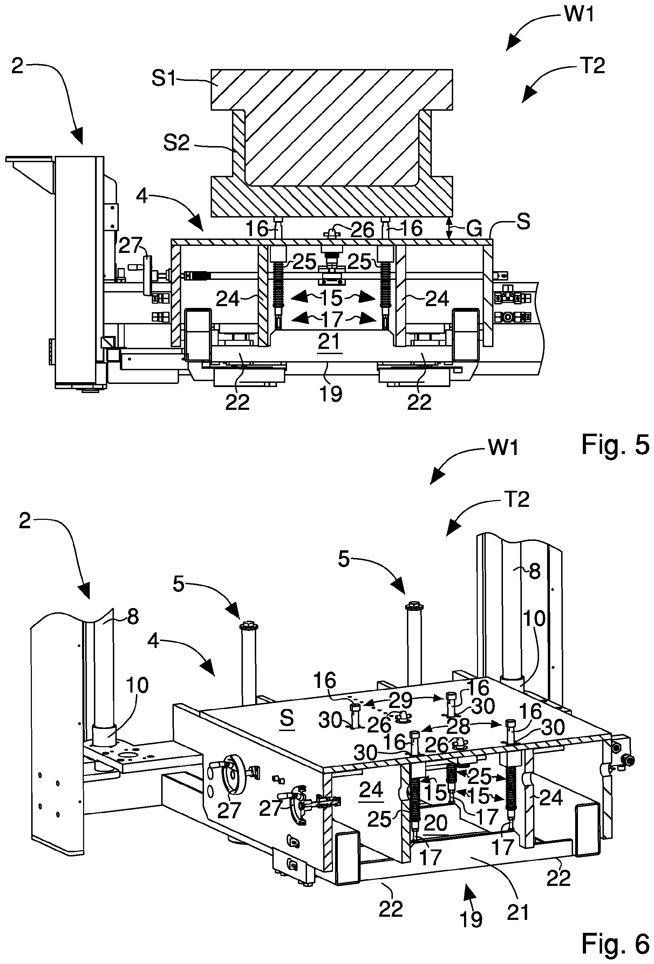

In use, as will be disclosed better below, the spacer means 15 is movable, with respect to the second table 4, along a substantially vertical movement direction, between an operating position W1 (Figures 5 and 6) in which it interacts with abutting means, included in the apparatus 1 and disclosed below, and protrudes above the fixing surface S of the second table 4 to space, in particular lift, the half moulds S1, S2 with respect to the second table 4, and a non-operating position W2 (Figures 3 and 4), in which it does not interact with the abutting means and with the half moulds S1, S2 and is positioned below the fixing surface S of the second table 4.

The spacer means comprises pins 15, extending along a substantially vertical axis. In particular, the spacer means comprises four pins 15 arranged at the vertexes of a square. Each pin 15 comprises a first end 16 and a second end 17, opposite the first end 16.

The aforesaid abutting means is connected to, or is part of, the frame 2 and is configured for interacting with the spacer means 15. The abutting means comprises a first abutment 19 and a second abutment 20, which are fixed and parallel to one another, extending substantially parallel to a horizontal axis. In particular, the first abutment 19 and the second abutment 20 each comprise a central abutment portion 21, arranged, as explained below, to abut on the second ends 17 of the pins 15, and two side portions 22, arranged on the sides of the central abutment portion 21 and having, with respect to the latter, a lower height.

Also, the apparatus 1 comprises elastic means 25 acting on the spacer means 15 so as to push, downwards, the spacer means 15 in the non-operating position W2. In particular, the elastic means comprises four springs 25, for example helical springs, each acting on a respective pin 15.

Also, the apparatus 1 comprises quick connecting means 26, for example of the bayonet type, that are drivable manually by respective handwheels 27 to fix removably the first half mould S1 to the first table 3 and the second half mould S2 to the second table 4. In particular, in the embodiment shown, four quick connecting means 26 are provided for the first table 3 and two for the second table 4. The quick connecting means 26 of the second table 4 are aligned with one another, are interposed between two pins 15, each of the quick connecting means 26 being aligned with the pins 15 between which it is interposed.

In use, in a mould-changing step, the moving means 5 of the first table 3 is driven to bring the first table 3 towards the second table 4 until it shapingly couples the first half mould S1 with the second half mould S2 (Figures 3 and 4). The moving means 5 of the second table 4 maintains the second table 4 in an operating configuration T1 with respect to the frame 2, in which the second table 4 is near an end stroke configuration T2 (Figures 5 and 6) with respect to the frame 2. In other words, in the operating configuration T1 the second table 4 is displaced slightly, upwards, with respect to its end stroke configuration T2.

Subsequently, the quick connecting means 26 is driven to release the first half mould S1 and the second half mould S2 from the first table 3 and from the second table 4, respectively.

In the configuration shown in Figures 3 and 4, the spacer means 15 is maintained in the non-operating position W2 by the elastic means 25. In this configuration, the first ends 16 of the pins 15 are below or at most flush with the fixing surface S of the second table 4, and do not interact with the pair formed by the first half mould S1 and by the second half mould S2. Also, in the non-operating position W2, the second ends 17 of the pins 15 are at a certain distance from, so as not to abut, the first abutment 19 and the second abutment 20.

Subsequently, as shown in Figures 5 and 6, the moving means 5 of the second table 4 positions the second table 4 in the end stroke configuration T2. In this configuration, the second ends 17 of the pins 15 abut on the central abutment portion 21 of the abutting means 19, 20, so as to contrast the elastic force exerted by the springs 25 on the pins 15, such that the first ends 16 of the pins 15 protrude above the fixing surface S of the second table 4 and lift the half moulds S1, S2. In particular, in the end stroke configuration T2, the first abutment 19 abuts on second ends 17 of a first pair 28 of pins 15, whereas the second abutment 20 abuts on second ends 17 of a second pair 29 of pins 15, between the pins 15 forming each pair 28, 29 there being interposed one of the aforesaid quick connecting means 26. In this configuration it is possible for the forks of a forklift truck, not shown, to be inserted into a space G (Figure 5) defined between the second table 4 and the second half mould S2, and the pair of half moulds S1, S2 to be replaced to be removed from the forming apparatus 1.

A step of loading new half moulds is performed reversibly with respect to what is disclosed above, starting from the end stroke configuration T2 of the second table 4.

In one embodiment of the invention, which is not shown, the spacer means comprises two pins whereas the abutting means comprises a single abutment configured for interacting with the two pins.

In another embodiment of the invention, which is not shown, the spacer means comprises three pins, for example arranged at the vertexes of an equilateral triangle, whereas the abutting means comprises at least one abutment configured for interacting with the pins.

In yet another embodiment of the invention, which is not shown, the abutting means is drivable between an extended configuration, in which the abutting means interacts with the spacer means, and a compact configuration, in which the abutting means does not interact with the spacer means. For example, in the extended configuration, the abutting means is in a vertical position whereas in the compact configuration the abutting means is in a horizontal position. In this embodiment of the invention, moreover, activating means is provided, for example comprising an actuator, to rotate the abutting means between the extended configuration and the compact configuration. Owing to this embodiment of the invention, it is possible to provide the second table with a greater stroke than in the previously disclosed embodiment. In fact, once the mould change has been carried out, it is possible to lower the abutting means in the compact configuration, thereby providing the second table with an extra stroke downwards with respect to the preceding embodiment in which the abutting means was fixed.

It should be noted how the apparatus 1 according to the invention is provided with an efficient, safe and easy-to-make lifting system (comprising the spacer means 15, the abutting means 19, 20, the moving means 5 of the second table 4 and elastic means 25). In fact, this lifting system does not require, unlike known lifting systems, any additional pneumatic device (with all the disadvantages linked to) for driving the spacer means 15, the latter being driven by the moving means 5 already present in the apparatus 1 for moving the second table 4.

## Claims

1. Forming apparatus (1) comprising:
- a frame (2);
- a table (4), which is provided with holes (30), for supporting at least one half mould (S1, S2);
- moving means (5) for moving said table (4) with respect to said frame (2);
- spacer means (15) slidably associated with said table (4); and
- abutting means (19, 20) for abutting said spacer means (15);
**characterised in that**
said abutting means (19, 20) is arranged on said frame (2) and is configured for interacting with said spacer means (15) when said moving means (5) moves said table (4) in a set operating configuration (T2) with respect to said frame (2), for moving said spacer means (15) through said holes (30) above said table (4) so as to lift said at least one half mould (S1, S2) from said table (4).

2. Apparatus (1) according to claim 1, wherein said spacer means (15) is movable, with respect to said table (4), between an operating position (W1) wherein said spacer means (15) interacts with said abutting means (19, 20) and a non-operating position (W2), wherein said spacer means (15) does not interact with said abutting means (19, 20) and with said at least one half mould (S1, S2).

3. Apparatus (1) according to claim 2, wherein said spacer means (15) is movable, with respect to said table (4), along a substantially vertical movement direction between said operating position (W1) and said non-operating position (W2), and wherein, in said operating position (W1) said spacer means (15) protrudes above, at least partially, from said table (4), for spacing said at least one half mould (S1, S2) with respect to said table (4).

4. Apparatus (1) according to any preceding claim, wherein said spacer means comprises at least one pin (15) and said abutting means (19, 20) comprises at least one abutment configured for interacting with said at least one pin (15).

5. Apparatus (1) according to any preceding claim, wherein said spacer means comprises at least three pins (15) and said abutting means (19, 20) comprises at least one abutment configured for interacting with said pins.

6. Apparatus (1) according to any preceding claim, wherein said spacer means comprises four pins (15) and said abutting means comprises two abutments (19, 20), each of said abutments (19, 20) being configured for interacting with a pair (28, 29) of said pins (15).

7. Apparatus (1) according to any one of claims 2 to 6, and comprising elastic means (25) acting on said spacer means (15) so as to push said spacer means (15) downwards into said non-operating position (W2) wherein said spacer means (15) is below said table (4).

8. Apparatus (1) according to any preceding claim, wherein said abutting means (19, 20) is drivable between an extended configuration, wherein said abutting means (19, 20) interacts with said spacer means (15), and a compact configuration, wherein said abutting means (19, 20) does not interact with said spacer means (15).

9. Apparatus (1) according to claim 8, and comprising activating means for rotating said abutting means (19, 20) between said extended configuration and said compact configuration.

10. Apparatus (1) according to any preceding claim, wherein said abutting means (19, 20) is connected to, or is part of, said frame (2).

11. Apparatus (1) according to any preceding claim, wherein said operating configuration is an end stroke configuration (T2) of said table (4) with respect to said frame (2).

12. Apparatus (1) according to any preceding claim, in cui said table (4) comprises a fixing surface (S) for fixing said at least one half mould (S1, S2), and a housing (23), obtained below said fixing surface (S), for receiving said spacer means (15).

## Patentansprüche

1. Formvorrichtung (1) mit:
- einem Rahmen (2);
- einem Tisch (4), der mit Löchern (30) versehen ist, um wenigstens eine Formhälfte (S1, S2) aufzunehmen;
- einem Bewegungsmittel (5) zum Bewegen des Tisches (4) in Bezug auf den Rahmen (2);
- einem Abstandsmittel (15), das verschiebbar mit dem Tisch (4) verbunden ist; und
- einem Anlagemittel (19, 20) zur Anlage an dem Abstandsmittel (15);
**dadurch gekennzeichnet, dass**
das Anlagemittel (19, 20) auf dem Rahmen (2) angeordnet ist und zum Zusammenwirken mit dem Abstandsmittel (15) ausgebildet ist, wenn das Bewegungsmittel (5) den Tisch (4) in einer Satzarbeitskonfiguration (T2) in Bezug auf den Rahmen (2) bewegt, um das Abstandsmittel (15) durch die Löcher (30) oberhalb des Tisches (4) zu bewegen, so dass wenigstens eine Formhälfte (S1, S2) von dem Tisch (4) angehoben wird.

2. Vorrichtung (1) nach Anspruch 1, bei der das Abstandsmittel (15) in Bezug auf den Tisch (4) beweglich ist zwischen einer Arbeitsposition (W1), in der das Abstandsmittel (15) mit dem Anlagemittel (19, 20) interagiert, und einer nicht arbeitsmäßigen Position (W2), in der das Abstandsmittel (15) nicht mit dem Anlagemittel (19, 20) und der wenigstens einen Formhälfte (S1, S2) zusammenwirkt.

3. Vorrichtung (1) nach Anspruch 2, bei der das Abstandsmittel (15) in Bezug auf den Tisch (4) entlang einer im Wesentlichen vertikalen Bewegungsrichtung zwischen der Arbeitsposition (W1) und der nicht arbeitsmäßigen Position (W2) beweglich ist, und wobei das Abstandsmittel (15) in der Arbeitsposition (W1) wenigstens teilweise von dem Tisch (4) nach oben hervorsteht, um die wenigstens eine Formhälfte (S1, S2) in Bezug auf den Tisch (4) zu beabstanden.

4. Vorrichtung (1) nach irgendeinem vorhergehenden Anspruch, bei der das Abstandsmittel wenigstens einen Stift (15) aufweist und das Anlagemittel (19, 20) wenigstens eine Anlage aufweist, die zum Zusammenwirken mit dem wenigstens einen Stift (15) ausgebildet ist.

5. Vorrichtung (1) nach irgendeinem vorhergehenden Anspruch, bei der das Abstandsmittel wenigstens drei Stifte (15) und das Anlagemittel (19, 20) wenigstens eine Anlage aufweist, die zum Zusammenwirken mit den Stiften ausgebildet ist.

6. Vorrichtung (1) nach irgendeinem vorhergehenden Anspruch, bei der das Abstandsmittel vier Stifte (15) und das Anlagemittel zwei Anlagen (19, 20) aufweist, wobei jede der Anlagen (19, 20) zum Zusammenwirken mit einem Paar (28, 29) der Stifte (15) ausgebildet ist.

7. Vorrichtung (1) nach irgendeinem der Ansprüche 2 bis 6, die ferner ein elastisches Mittel (25) aufweist, das auf das Abstandsmittel (15) wirkt, um das Abstandsmittel (15) nach unten in die nicht arbeitsmäßige Position (W2) zu drücken, wenn das Abstandsmittel (15) unterhalb des Tisches (4) ist.

8. Vorrichtung (1) nach irgendeinem vorhergehenden Anspruch, bei der das Anlagemittel (19, 20) zwischen einer ausgedehnten Konfiguration, in der das Anlagemittel (19, 20) mit dem Abstandsmittel (15) zusammenwirkt, und einer kompakten Konfiguration verfahrbar ist, in der das Anlagemittel (19, 20) nicht mit dem Abstandsmittel (15) zusammenwirkt.

9. Vorrichtung (1) nach Anspruch 8, die ferner ein Aktivierungsmittel zum Drehen des Anlagemittels (19, 20) zwischen der ausgefahrenen Konfiguration und der kompakten Konfiguration aufweist.

10. Vorrichtung (1) nach irgendeinem vorhergehenden Anspruch, bei der das Anlagemittel (19, 20) mit dem Rahmen (2) verbunden ist oder ein Teil davon ist.

11. Vorrichtung (1) nach irgendeinem vorhergehenden Anspruch, bei der die arbeitsmäßige Konfiguration eine Endhubkonfiguration (T2) des Tisches (4) in Bezug auf den Rahmen (2) ist.

12. Vorrichtung (1) nach irgendeinem vorhergehenden Anspruch, bei der der Tisch (4) eine Fixieroberfläche (S) zum Fixieren der wenigstens einen Formhälfte (S1, S2) und ein Gehäuse (23) aufweist, das unterhalb der Fixieroberfläche (S) angeordnet ist, um das Abstandsmittel (15) aufzunehmen.

## Revendications

1. Appareil de formage (1) comprenant :
- un bâti (2) ;
- une table (4), qui est pourvue de trous (30), pour supporter au moins un demi-moule (S1, S2) ;
- des moyens de déplacement (5) pour déplacer ladite table (4) par rapport audit bâti (2) ;
- des moyens d'écartement (15) associés de manière coulissante à ladite table (4) ; et
- des moyens de butée (19, 20) pour venir en butée contre lesdits moyens d'écartement (15) ;
**caractérisé en ce que**
lesdits moyens de butée (19, 20) sont agencés sur ledit bâti (2) et sont configurés pour interagir avec lesdits moyens d'écartement (15) lorsque lesdits moyens de déplacement (5) déplacent ladite table (4) dans une configuration de fonctionnement donnée (T2) par rapport audit bâti (2), pour déplacer lesdits moyens d'écartement (15) à travers lesdits trous (30) au-dessus de ladite table (4) de manière à soulever ledit au moins un demi-moule (S1, S2) de ladite table (4).

2. Appareil (1) selon la revendication 1, dans lequel lesdits moyens d'écartement (15) sont mobiles, par rapport à ladite table (4), entre une position opérationnelle (W1) dans laquelle lesdits moyens d'écartement (15) interagissent avec lesdits moyens de butée (19, 20) et une position non opérationnelle (W2), dans laquelle lesdits moyens d'écartement (15) n'interagissent pas avec lesdits moyens de butée (19, 20) et avec ledit au moins un demi-moule (S1, S2).

3. Appareil (1) selon la revendication 2, dans lequel lesdits moyens d'écartement (15) sont mobiles, par rapport à ladite table (4), selon une direction de déplacement sensiblement verticale entre ladite position opérationnelle (W1) et ladite position non opérationnelle (W2), et dans lequel, dans ladite position opérationnelle (W1) lesdits moyens d'écartement (15) font saillie, au moins partiellement, au-dessus de ladite table (4), pour écarter ledit au moins un demi-moule (S1, S2) par rapport à ladite table (4).

4. Appareil (1) selon l'une quelconque des revendications précédentes, dans lequel lesdits moyens d'écartement comprennent au moins une broche (15) et lesdits moyens de butée (19, 20) comprennent au moins une butée configurée pour interagir avec ladite au moins une broche (15).

5. Appareil (1) selon l'une quelconque des revendications précédentes, dans lequel lesdits moyens d'écartement comprennent au moins trois broches (15) et lesdits moyens de butée (19, 20) comprennent au moins une butée configurée pour interagir avec lesdites broches.

6. Appareil (1) selon l'une quelconque des revendications précédentes, dans lequel lesdits moyens d'écartement comprennent quatre broches (15) et lesdits moyens de butée comprennent deux butées (19, 20), chacune desdites butées (19, 20) étant configurée pour interagir avec une paire (28, 29) desdites broches (15).

7. Appareil (1) selon l'une quelconque des revendications 2 à 6, et comprenant des moyens élastiques (25) agissant sur lesdits moyens d'écartement (15) de manière à pousser lesdits moyens d'écartement (15) vers le bas dans ladite position non opérationnelle (W2) dans laquelle lesdits moyens d'écartement (15) sont en dessous de ladite table (4).

8. Appareil (1) selon l'une quelconque des revendications précédentes, dans lequel lesdits moyens de butée (19, 20) peuvent être entraînés entre une configuration déployée, dans laquelle lesdits moyens de butée (19, 20) interagissent avec lesdits moyens d'écartement (15), et une configuration compacte, dans laquelle lesdits moyens de butée (19, 20) n'interagissent pas avec lesdits moyens d'écartement (15).

9. Appareil (1) selon la revendication 8, et comprenant des moyens d'activation pour entraîner en rotation lesdits moyens de butée (19, 20) entre ladite configuration déployée et ladite configuration compacte.

10. Appareil (1) selon l'une quelconque des revendications précédentes, dans lequel lesdits moyens de butée (19, 20) sont reliés à, ou font partie de, ledit bâti (2).

11. Appareil (1) selon l'une quelconque des revendications précédentes, dans lequel ladite configuration de fonctionnement est une configuration de fin de course (T2) de ladite table (4) par rapport audit bâti (2).

12. Appareil (1) selon l'une quelconque des revendications précédentes, dans lequel ladite table (4) comprend une surface de fixation (S) pour fixer ledit au moins un demi-moule (S1, S2), et un logement (23), obtenu en dessous de ladite surface de fixation (S), pour recevoir lesdits moyens d'écartement (15).
